# FASCICULE DE BREVET EUROPEEN

(11) **EP 4 180 704 B1**
(45) Date de publication et mention de la délivrance du brevet: **17.04.2024**
(21) Numéro de dépôt: 22202385.5
(22) Date de dépôt: 19.10.2022
(51) Int. Cl.: F16L 21/08, F16L 29/04, F16L 59/065, F16L 59/14, F16L 59/18, F16L 37/36

(54) **DISPOSITIF ET PROCÉDÉ D'ACCOUPLEMENT**
KUPPLUNGSVORRICHTUNG UND -VERFAHREN
COUPLING DEVICE AND METHOD

(30) Priorité: 15.11.2021 FR 2112048
(43) Date de publication de la demande: 17.05.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: COLEIRO, Gaëtan, 38360 SASSENAGE (FR); PENNEC, Yan, 38360 SASSENAGE (FR)
(74) Mandataire: Air Liquide

(56) Documents cités:
- FR-A- 1 310 862
- US-A1- 2006 038 401
- US-A1- 2017 191 595
- US-A1- 2021 207 759

## Description

L'invention concerne un dispositif et un procédé d'accouplement. L'invention concerne plus particulièrement un dispositif d'accouplement détachable à fermeture automatique pour le transport de fluide cryogénique comprenant deux conduites de transport de fluide s'étendant selon une direction longitudinale et comprenant chacune, à une extrémité de raccordement, un mécanisme de clapet configuré pour fermer automatiquement la conduite lorsque les extrémités de raccordement sont séparées et permettre l'ouverture de la conduite lorsque les extrémités de raccordement sont accouplées, le dispositif comprenant en outre un tube externe disposé autour de chaque conduites de transport et définissant un espace sous vide pour l'isolation thermique de la conduite de transport, dans la position accouplée les deux extrémités de raccordement sont configurées pour être déplaçables relativement longitudinalement entre une première configuration fermée dans laquelle les mécanismes de clapets sont fermés et empêchent la communication fluidique entre les deux conduites de transport et une seconde configuration ouverte dans laquelle les mécanismes de clapets sont ouverts et assurent une communication fluidique entre les deux conduites de transport.

Les dispositifs d'accouplement pour le transfert de fluides cryogéniques (par exemple de l'hydrogène liquéfié) utilisent un raccord du type « Johnston ». Les dispositifs connus nécessitent une purge de la ligne avant et après accouplement.

D'autres types de raccords existent pour les applications de gaz naturel liquéfié. Cependant, ces derniers ne sont pas adaptés à l'hydrogène pour des raisons d'efficacité et de sécurité. En particulier, ils n'offrent pas l'isolation thermique requise.

Le document US 2006/038401 A1 montre un accouplement pour conduites ou tuyaux isolés sous vide destinés à véhiculer un ou plusieurs fluides cryogéniques, dans lequel un bouchon de couplage à un ou plusieurs coeurs et une douille de couplage correspondante comportent chacun une vanne à bille munie d'un trou de passage et un manchon de verrouillage couplé pour faire tourner sa vanne à bille respective lorsque le manchon est déplacé axialement.

Une problématique des dispositifs d'accouplement pour le transfert d'hydrogène liquide est le risque d'emprisonner de l'air à l'intérieur d'un volume mort interne au raccord. Ceci provoque le risque de transporter l'air solide (oxygène) vers des réservoirs ou d'autres composants.

Un but de la présente invention est de pallier tout ou partie des inconvénients de l'art antérieur relevés ci-dessus.

A cette fin, le dispositif d'accouplement selon l'invention, par ailleurs conforme à la définition générique qu'en donne le préambule ci-dessus, est essentiellement caractérisé en ce que le passage de la première configuration fermée à la seconde configuration ouverte étant réalisé par un rapprochement longitudinal relatif des deux conduites de transport de fluide et/ou un rapprochement relatif des deux mécanismes de clapets, dans lequel l'extrémité de raccordement d'une première des deux conduites comprend une bague d'étanchéité solidaire du tube externe, la bague d'étanchéité comprenant un ensemble de joint(s) d'étanchéité configuré(s) pour assurer une étanchéité vis-à-vis de l'extérieur entre les deux extrémités de raccordement lorsque les deux extrémités de raccordement sont accouplées, la bague d'étanchéité étant mobile en translation selon la direction longitudinale relativement au tube externe entre deux positions distinctes lors du passage de la première configuration fermée à la seconde configuration ouverte.

Par ailleurs, des modes de réalisation de l'invention peuvent comporter l'une ou plusieurs des caractéristiques suivantes :
- le dispositif comprend un organe de rappel, par exemple un ressort, sollicitant la bague d'étanchéité vers sa première position,
- la bague d'étanchéité comprend une face interne munie d'au moins un joint d'étanchéité coopérant en étanchéité avec le tube duquel la bague d'étanchéité est solidaire,
- le au moins un joint situé sur la face interne de la bague d'étanchéité assure une étanchéité en étant comprimé dans un plan non parallèle à la direction longitudinale et/ou comprimé dans un plan parallèle à la direction longitudinale,
- la bague d'étanchéité comprend une face terminale munie d'au moins un joint d'étanchéité destiné à coopérer en étanchéité l'autre extrémité de raccordement lorsque les deux extrémités de raccordement sont accouplées,
- le au moins un joint situé sur la face terminale assure une étanchéité en étant comprimé dans un plan non parallèle à la direction longitudinale,
- l'une des extrémités de raccordement comprend un organe de verrouillage mobile déplaçable entre une position de verrouillage assurant une solidarisation des deux extrémités de raccordement accouplées et une position de déverrouillage n'assurant pas une solidarisation entre les deux extrémités de raccordement accouplées,
- dans sa position de verrouillage, l'organe de verrouillage assure une solidarisation entre la bague d'étanchéité portée par une première extrémité de raccordement et l'autre extrémité de raccordement,
- dans la première configuration fermée, les mécanismes de clapets sont en contact ou ne sont pas en contact, dans la seconde configuration ouverte les mécanismes de clapets sont en contact et exercent un effort de poussée l'un vers l'autre assurant leur déplacement et leur ouverture,
- le mécanisme de clapet d'une première des conduites de transport comprenant un clapet mobile sollicité par un organe de rappel vers une position de fermeture contre un siège fixe disposé autour du clapet,
- le mécanisme de clapet de la seconde conduite de transport comprend un clapet de référence et un siège mobile disposé autour du clapet de référence, le siège mobile étant sollicité vers une position de fermeture contre le clapet de référence par un organe de rappel,
- dans la première configuration fermée, le clapet de référence de la seconde conduite de transport ne repousse pas le clapet mobile de la première conduite de transport hors de son siège conservant la fermeture du mécanisme de clapet, le siège mobile étant dans sa position de fermeture contre le clapet de référence, dans la seconde configuration ouverte, les extrémités de raccordement sont en contact et le clapet de référence de la seconde conduite de transport repousse le clapet mobile de la première conduite de transport hors de son siège et provoque l'ouverture du mécanisme de clapet,
- le mécanisme de clapet d'une des deux conduites de transport est logé relativement plus en retrait à l'intérieur de son tube externe que l'autre mécanisme de clapet dans son tube de sorte à former un système de type mâle et femelle dans lequel, en position assemblée des deux conduites de transport, une extrémité de raccordement pénètre dans l'autre extrémité de raccordement,
- l'espace sous vide entre le tube externe et la conduite de transport comprend un isolant thermique, par exemple du type multicouches « MLI »,
- le clapet de référence de la seconde conduite de transport est fixe et non déplaçable par rapport à sa conduite de transport,
- le mécanisme de clapet de la seconde conduite de transport est situé de façon affleurante à l'extrémité terminale cette seconde conduite de transport,
- le procédé de séparation de deux conduites de transport accouplées comprend une étape de fermeture des deux mécanismes de clapet via un écartement relatif des deux conduites de transport de fluide et/ou un déplacement relatifs d'au moins une partie des deux mécanismes de clapets en conservant l'accouplement étanche des deux extrémités de raccordement, puis une étape de séparation des deux extrémités de raccordement,
- lors du passage de l'étape de fermeture des deux mécanismes de clapet à l'étape de séparation, le dispositif passe par la première configuration fermée intermédiaire dans laquelle les deux extrémités de raccordement restent accouplées de façon étanche vis-à-vis de l'extérieur et les deux mécanismes de clapet sont en position fermée, l'étape de fermeture des deux mécanismes de clapet étant réalisée via un écartement relatif des deux conduites de transport de fluide et/ou un déplacement relatif d'au moins une partie des deux mécanismes de clapets,
- dans la position accouplée, le déplacement entre la première configuration fermée et la seconde configuration ouverte sont réalisés manuellement et/ou de façon commandée par un organe de commande,
- l'organe de verrouillage mobile comprend une bague de verrouillage montée mobile en translation selon la direction longitudinale sur une extrémité de raccordement.

L'invention concerne également un procédé d'accouplement de deux conduites de transport d'un dispositif selon l'une quelconque des caractéristiques ci-dessus ou ci-dessous, comprenant une étape de rapprochement des deux extrémités de raccordement dans laquelle les deux extrémités de raccordement sont accouplées de façon étanche vis-à-vis de l'extérieur, une étape de mise en contact des deux mécanismes de clapet, une étape d'ouverture deux mécanismes de clapet et une étape de circulation de fluide cryogénique d'une conduite à l'autre.

Selon une particularité possible le procédé comporte, avant l'étape d'ouverture des deux mécanismes de clapet, une configuration intermédiaire dans laquelle les deux extrémités de raccordement sont accouplées de façon étanche vis-à-vis de l'extérieur et les deux mécanismes de clapet sont en position fermée, l'étape d'ouverture des deux mécanismes de clapet étant réalisée via un rapprochement relatif supplémentaire des deux conduites de transport de fluide et/ou un déplacement relatifs d'au moins une partie des deux mécanismes de clapets. L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
[Fig. 1] représente une vue en coupe longitudinale, schématique et partielle, illustrant un exemple de réalisation d'un dispositif d'accouplement dans un premier état séparé,
[Fig. 2] représente une vue en coupe longitudinale, schématique et partielle, illustrant le même dispositif d'accouplement dans un deuxième état accouplé étanche non verrouillé et clapets fermés (première configuration fermée),
[Fig. 3] représente une vue en coupe longitudinale, schématique et partielle, illustrant le même dispositif d'accouplement dans un troisième état accouplé étanche verrouillé et clapets fermés (première configuration fermée),
[Fig. 4] représente une vue en coupe longitudinale, schématique et partielle, illustrant le même dispositif d'accouplement dans un quatrième état accouplé étanche verrouillé et clapets ouverts (seconde configuration ouverte),
[Fig. 5] représente une vue en coupe longitudinale, schématique et partielle, illustrant une autre variante de réalisation du dispositif d'accouplement dans un état accouplé étanche et clapets fermés (première configuration fermée),
[Fig. 6] représente une vue en coupe longitudinale, schématique et partielle, illustrant encore une autre variante de réalisation du dispositif d'accouplement dans un état accouplé étanche et clapets ouverts (deuxième configuration fermée).

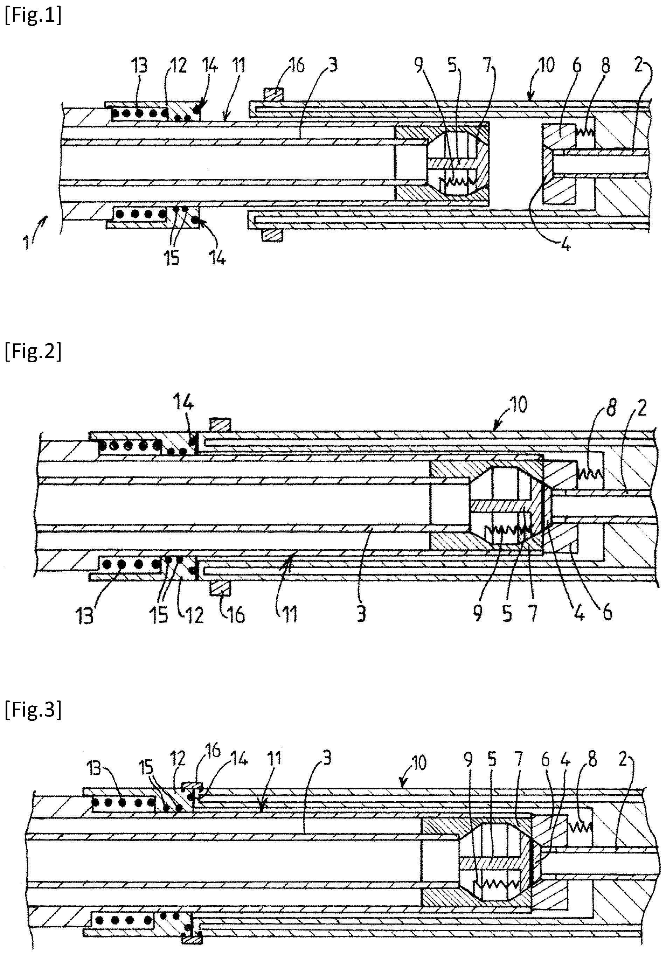

Le dispositif 1 d'accouplement illustré à la [Fig. 1] peut être un raccord détachable de type « raccord rapide » à fermeture automatique pour le transport de fluide cryogénique. Ce dispositif 1 forme par exemple un raccord fluidique entre un distributeur (mobile ou fixe) et un receveur (respectivement fixe ou mobile), par exemple pour le transfert ou remplissage de fluide d'une source vers un récepteur tel qu'un réservoir.

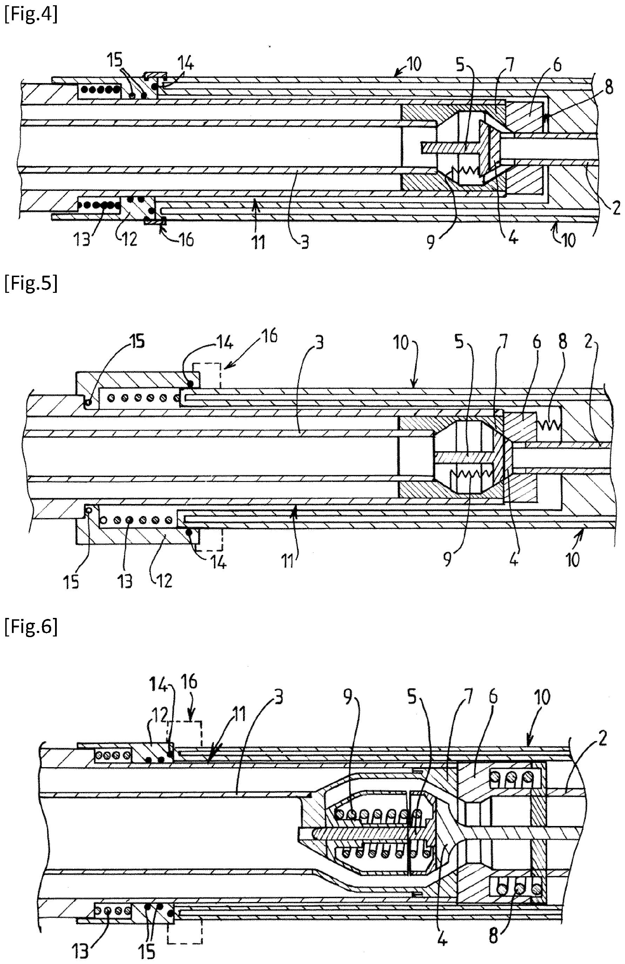

Le dispositif comprend deux conduites 2, 3 de transport de fluide s'étendant selon une direction longitudinale. Chaque conduite 2, 3 comprend, à une extrémité de raccordement, un mécanisme de clapet configuré pour fermer automatiquement la conduite 2, 3 lorsque les extrémités de raccordement sont séparées (cf. [Fig. 1]) et pour permettre l'ouverture de la conduite 2, 3 lorsque les extrémités de raccordement sont accouplées (cf. [Fig. 4] ou [Fig. 6]).

Le dispositif 1 comprend en outre un tube 10, 11 externe disposé autour de chaque conduites 2, 3 de transport. Le tube 10, 11 externe définit un espace sous vide pour l'isolation thermique autour de la conduite 2, 3 de transport.

L'espace sous vide entre le tube externe 10, 11 et la conduite 2, 3 de transport comprend par exemple un isolant thermique, par exemple du type multicouches « MLI ».

Dans la position accouplée (étanche), les deux extrémités de raccordement sont configurées pour être déplaçables relativement longitudinalement entre une première configuration fermée dans laquelle les mécanismes de clapets sont fermés et empêchent la communication fluidique entre les deux conduites 2, 3 de transport (cf. [Fig. 2] ou [Fig. 3] et une seconde configuration ouverte dans laquelle les mécanismes de clapets sont ouverts et assurent une communication fluidique entre les deux conduites 2, 3 de transport (cf. [Fig. 4]).

Le passage de la première configuration fermée à la seconde configuration ouverte est réalisé par un rapprochement longitudinal relatif supplémentaire des deux conduites 2, 3 de transport de fluide et/ou un rapprochement relatif des deux mécanismes de clapets 4, 6, 8, 5, 7, 9.

Comme illustré, le mécanisme de clapet 4, 6, 8 d'une 2 des deux conduites de transport est de préférence logé relativement plus en retrait à l'intérieur de son tube 10 externe que l'autre mécanisme de clapet 5, 7, 9 dans son tube 11 de sorte à former un système de type mâle et femelle dans lequel, en position assemblée/accouplée des deux conduites 2, 3 de transport, une extrémité de raccordement pénètre dans l'autre extrémité de raccordement.

Comme illustré, l'extrémité de raccordement d'une première 3 des deux conduites comprend une bague 12 d'étanchéité solidaire du tube 11 externe.

La bague 12 d'étanchéité comprend un ensemble de joint(s) 14, 15 d'étanchéité configuré(s) pour assurer une étanchéité vis-à-vis de l'extérieur entre les deux extrémités de raccordement lorsque les deux extrémités de raccordement sont accouplées. Cette bague 12 d'étanchéité est par exemple montée mobile en translation selon la direction longitudinale relativement au tube 11 externe entre deux positions distinctes lors du passage de la première configuration fermée à la seconde configuration ouverte.

Le dispositif comprend de préférence un organe 13 de rappel, par exemple un ressort, notamment un ressort de compression sollicitant la bague 12 d'étanchéité vers sa première position.

La bague 12 d'étanchéité comprend une face interne munie d'au moins un joint 15 d'étanchéité (et de préférence au moins deux joints 15) coopérant en étanchéité avec le tube 11 duquel la bague 12 d'étanchéité est solidaire.

La bague 12 d'étanchéité comprend en outre une face ou extrémité terminale destinée à venir en appui sur l'autre extrémité de raccordement en position accouplée. Cette face terminale est munie d'au moins un joint 14 d'étanchéité destiné à coopérer en étanchéité l'autre extrémité de raccordement lorsque les deux extrémités de raccordement sont accouplées (cf. [Fig. 2]). Ainsi, la bague 12 d'étanchéité réalise (ou contribue à) à la liaison étanche entre les deux extrémités de raccordement accouplées (avec les joints 14, 15).

Comme illustré, le au moins un joint 15 situé sur la face interne de la bague 12 d'étanchéité peut assurer une étanchéité en étant comprimé dans un plan parallèle à la direction longitudinale. De même, le au moins un joint 14 situé sur la face terminale peut assurer une étanchéité en étant comprimé dans un plan non parallèle à la direction longitudinale et notamment dans un plan perpendiculaire à la direction longitudinale de la conduite.

Bien entendu cette agencement n'est pas limitatif tout autre type d'agencement de joint(s) axiaux ou radiaux peut être envisagé (cf. [Fig. 5] qui sera décrite ci-après).

Des joints radiaux réalisent l'étanchéité de l'accouplement avant que les mécanismes de clapets soient en contact (sans être ouverts). Ceci peut piéger un volume mort non nul. Cependant ces joints radiaux permettent le déplacement d'une pièce par rapport à l'autre. Le ou les joints axiaux réalisent une étanchéité ne permettant pas de déplacement axial d'une pièce par rapport à l'autre. Cependant cette configuration de joints est avantageuse pour minimiser les volumes morts/piégés lors de l'accouplement.

Comme illustré, l'une des extrémités de raccordement peut comprendre un organe 16 de verrouillage mobile configuré pour bloquer et sécuriser l'accouplement étanche. L'organe 16 de verrouillage est déplaçable entre une position de verrouillage assurant une solidarisation des deux extrémités de raccordement accouplées (cf. [Fig. 3] ou [Fig. 4]) et une position de déverrouillage n'assurant pas une solidarisation entre les deux extrémités de raccordement accouplées (cf. [Fig. 2] par exemple).

Comme illustré, dans sa position de verrouillage, l'organe 16 de verrouillage peut assurer par exemple une solidarisation mécanique entre la bague 12 d'étanchéité portée par une première extrémité de raccordement et l'autre extrémité de raccordement.

De préférence, ce verrouillage ne permet aucun déplacement des deux extrémités.

Ce verrouillage 16 mécanique peut être nécessaire pour bloquer la bague 12 d'étanchéité notamment en fin d'ouverture des clapets. En effet, selon la configuration, sans ce verrouillage, la force de pression du fluide dans le dispositif peut être supérieure à la charge du ressort 13 qui pousse la bague d'étanchéité sur l'autre extrémité de raccordement.

L'organe 16 de verrouillage peut être monté sur l'une des deux extrémités de raccordement.

Dans l'exemple de réalisation de la [Fig. 2], dans la première configuration fermée (accouplement étanche et clapets fermés), les mécanismes de clapets sont en contact (ou affleurants). Bien entendu, en variante, dans cette première configuration fermée les mécanismes de clapets pourraient ne pas être en contact (voire distants).

Le mécanisme de clapet 5, 7, 9 d'une première des conduites 3 de transport peut comprendre un clapet 5 mobile sollicité par un organe 9 de rappel (ressort par exemple) vers une position de fermeture contre un siège 7 fixe disposé autour du clapet 5.

Le mécanisme de clapet de la seconde conduite peut être du même type. Cependant, comme illustré, le mécanisme de clapet 4, 6, 8 de la seconde conduite 2 de transport peut comprendre un clapet 4 de référence fixe et un siège 6 mobile disposé autour du clapet 4 de référence. Le siège 6 mobile est sollicité vers une position de fermeture contre le clapet 4 de référence par un organe 8 de rappel, par exemple un ressort.

Comme illustré à la [Fig. 2] et à la [Fig. 3], dans la première configuration fermée, le clapet 4 de référence de la seconde conduite 3 de transport ne repousse pas le clapet 5 mobile de la première conduite 2 de transport hors de son siège 7. Ceci conserve la fermeture du mécanisme de clapet(s) et empêche l'écoulement de fluide. Le siège 6 mobile est lui dans sa position de fermeture contre le clapet 4 de référence.

En revanche, dans la seconde configuration ouverte (cf. [Fig. 4]), les extrémités de raccordement sont en contact et le clapet 4 de référence de la seconde conduite 3 de transport repousse le clapet 5 mobile de la première conduite 2 de transport hors de son siège (7) et provoque l'ouverture du mécanisme de clapet(s). De même, le mécanisme de clapet 4, 6, 8 de la seconde conduite 2 est ouvert. Par exemple, le siège 6 mobile est séparé du clapet 4 de référence à l'encontre de la pression du ressort 8.

Le mouvement d'écartement relatif de la seconde configuration ouverte à la première configuration fermée provoque la fermeture automatique des mécanismes de clapets (via notamment les organes de rappel).

Ainsi, la bague 12 d'étanchéité permet le déplacement relatif des deux extrémités de raccordement accouplées en maintenant l'étanchéité entre ces dernières.

Du fait de sa mobilité, relativement à son extrémité de raccordement, la bague peut former ainsi une extrémité rétractable d'une extrémité de raccordement par rapport à l'autre maintenant l'étanchéité entre les deux extrémités de raccordement lors de leur mouvement relatif selon la direction longitudinale.

L'accouplement peut comprendre les étapes suivantes :
- état séparé, mécanismes de clapets fermés cf. [Fig. 1],
- état accouplé étanche non verrouillé, mécanismes de clapets toujours fermés cf. [Fig. 2],
- état accouplé étanche verrouillé, mécanismes de clapets toujours fermés cf. [Fig. 3],
- état accouplé étanche verrouillé, mécanismes de clapets ouverts cf. [Fig. 4].

Dans une alternative possible en position la séquence d'utilisation pourrait être la suivante :
- insertion de l'extrémité de raccordement mobile dans ou autour de l'extrémité de raccordement fixe (l'étanchéité n'est pas encore réalisée les clapets sont fermés),
- verrouillage de liaison, par exemple via le verrouillage de la bague 12 d'étanchéité (l'étanchéité entre les extrémités de raccordement est réalisée, les clapets sont fermés),
- déplacement de la partie mobile vers la partie fixe pour l'ouverture des clapets.

Ce déplacement relatif des extrémités de raccordement pour ouvrir les clapets (et le mouvement inverse) peut être réalisé par un mécanisme de raccord rapide quelconque comprenant des organes d'attache conjugués sur les deux extrémités de raccordement, par exemple un mécanisme de type à baïonnette, à levier, à vérin, ou autre.

Dans cet exemple non limitatif, la bague 12 d'étanchéité est solidaire de l'extrémité de raccordement mâle (fixe ou mobile) mais pourrait être portée par l'autre extrémité de raccordement (femelle et mobile ou fixe).

De préférence, cette bague 12 d'étanchéité est montée sur la partie extérieure relativement chaude du dispositif d'accouplement (par opposition à la partie cryogénique proche des mécanismes de clapets en contact avec le fluide cryogénique) .

De préférence, la bague 12 d'étanchéité est montée sur l'extrémité de raccordement de type mâle et mobile du dispositif 1 (ceci limite les volumes morts dans l'accouplement). Cependant toute autre configuration est envisageable.

La variante de la [Fig. 6] correspond à l'état de la [Fig. 4] (accouplement étanche et mécanismes de clapets fermés) et illustre des exemples de mécanismes de clapets en position ouverte. Les mêmes éléments sont désignés par les mêmes références numériques. De plus, par soucis de simplification, cette variante illustrée ne possède pas de bague de verrouillage (facultative).

La variante de la [Fig. 5] correspond à l'état de la [Fig. 2] (accouplement étanche et mécanismes de clapets fermés). Dans cette variante un joint 14 d'étanchéité de l'extrémité terminale assure une étanchéité radiale (compression dans un plan parallèle à la direction longitudinale. De plus, au joint 15 interne est en étanchéité axiale (compression selon un plan perpendiculaire à la direction longitudinale.

Selon l'équilibre des efforts et notamment le tarage de l'organe 13 de rappel qui sollicite la bague 12 d'étanchéité, l'organe de verrouillage décrit ci-dessus peut éventuellement être omis.

Le verrouillage et l'actionnement des mécanismes de clapets peuvent se faire directement entre l'extrémité de raccordement fixe et l'extrémité de raccordement mobile au sans passer par la bague 12 d'étanchéité. Dans ce cas, pour obtenir l'étanchéité, notamment via un joint axial, ce joint peut être plaqué (par exemple par un ressort ou par la pression).

Une solution avantageuse est de prévoir un joint de type radial sur la partie femelle et un joint axial sur la partie mâle. Ceci permet le placage du joint 15 axial grâce à la pression exercée par le fluide dans le dispositif.

L'invention propose ainsi un dispositif 1 rapide, simple et sûr pour connecter et déconnecter à plusieurs reprises les tuyaux et/ou des réservoirs de fluides cryogéniques tels que l'hydrogène liquide. Les extrémités de raccordement peuvent être manipulées aisément manuellement.

Le dispositif minimise l'entrée de chaleur dans la partie froide. La partie extérieure n'est pas à température cryogénique.

La connexion/déconnexion peut être réalisée en étapes successives : i) accouplement et verrouillage le cas échéant (étanchéité à chaud) ii) ouverture des mécanismes de clapets (transfert de fluide) via un rapprochement supplémentaire ou écartement permis par la bague 12 d'étanchéité iii) fermeture des mécanismes de clapets (étanchéité cryogénique) iv) déverrouillage et séparation.

Le dispositif peut intégrer en plus un système de séparation d'urgence (« breakaway »).

## Revendications

1. Dispositif d'accouplement détachable à fermeture automatique pour le transport de fluide cryogénique comprenant deux conduites (2, 3) de transport de fluide s'étendant selon une direction longitudinale et comprenant chacune, à une extrémité de raccordement, un mécanisme de clapet (4, 6, 8, 5, 7, 9) configuré pour fermer automatiquement la conduite (2, 3) lorsque les extrémités de raccordement sont séparées et permettre l'ouverture de la conduite (2, 3) lorsque les extrémités de raccordement sont accouplées, le dispositif (1) comprenant en outre un tube (10, 11) externe disposé autour de chaque conduites (2, 3) de transport et définissant un espace sous vide pour l'isolation thermique de la conduite (2, 3) de transport, dans la position accouplée, les deux extrémités de raccordement était configurées pour être déplaçables relativement longitudinalement entre une première configuration fermée dans laquelle les mécanismes de clapets sont fermés et empêchent la communication fluidique entre les deux conduites (2, 3) de transport et une seconde configuration ouverte dans laquelle les mécanismes de clapets sont ouverts et assurent une communication fluidique entre les deux conduites (2, 3) de transport, le passage de la première configuration fermée à la seconde configuration ouverte étant réalisé par un rapprochement longitudinal relatif des deux conduites (2, 3) de transport de fluide et/ou un rapprochement relatif des deux mécanismes de clapets (4, 6, 8, 5, 7, 9), dans lequel l'extrémité de raccordement d'une première (3) des deux conduites comprend une bague (12) d'étanchéité solidaire du tube (11) externe, la bague (12) d'étanchéité étant mobile en translation selon la direction longitudinale relativement au tube (11) externe entre deux positions distinctes lors du passage de la première configuration fermée à la seconde configuration ouverte, **caractérisé en ce que** la bague (12) d'étanchéité comprend un ensemble de joint(s) (14, 15) d'étanchéité configuré(s) pour assurer une étanchéité vis-à-vis de l'extérieur entre les deux extrémités de raccordement lorsque les deux extrémités de raccordement sont accouplées.

2. Dispositif selon la revendication 1, **caractérisé en ce qu'**il comprend un organe (13) de rappel, par exemple un ressort, sollicitant la bague (12) d'étanchéité vers sa première position.

3. Dispositif selon la revendication 1 ou 2, **caractérisé en ce que** la bague (12) d'étanchéité comprend une face interne munie d'au moins un joint (15) d'étanchéité coopérant en étanchéité avec le tube (11) duquel la bague (12) d'étanchéité est solidaire.

4. Dispositif selon la revendication 3, **caractérisé en ce que** le au moins un joint (15) situé sur la face interne de la bague (12) d'étanchéité assure une étanchéité en étant comprimé dans un plan non parallèle à la direction longitudinale et/ou comprimé dans un plan parallèle à la direction longitudinale.

5. Dispositif selon l'une quelconque des revendications 1 à 4, **caractérisé en ce que** la bague (12) d'étanchéité comprend une face terminale munie d'au moins un joint (14) d'étanchéité destiné à coopérer en étanchéité avec l'autre extrémité de raccordement lorsque les deux extrémités de raccordement sont accouplées.

6. Dispositif selon la revendication 5, **caractérisé en ce que** le au moins un joint (14) situé sur la face terminale assure une étanchéité en étant comprimé dans un plan non parallèle à la direction longitudinale.

7. Dispositif selon l'une quelconque des revendications 1 à 6, **caractérisé en ce que** l'une des extrémités de raccordement comprend un organe (16) de verrouillage mobile déplaçable entre une position de verrouillage assurant une solidarisation des deux extrémités de raccordement accouplées et une position de déverrouillage n'assurant pas une solidarisation entre les deux extrémités de raccordement accouplées.

8. Dispositif selon la revendication 7, **caractérisé en ce que**, dans sa position de verrouillage, l'organe (16) de verrouillage assure une solidarisation entre la bague (12) d'étanchéité portée par une première extrémité de raccordement et l'autre extrémité de raccordement.

9. Dispositif selon l'une quelconque des revendications 1 à 8, **caractérisé en ce que**, dans la première configuration fermée, les mécanismes de clapets sont en contact ou ne sont pas en contact, dans la seconde configuration ouverte les mécanismes de clapets sont en contact et exercent un effort de poussée l'un vers l'autre assurant leur déplacement et leur ouverture.

10. Dispositif selon l'une quelconque des revendications 1 à 9, **caractérisé en ce que** le mécanisme de clapet (5, 7, 9) d'une première des conduites (3) de transport comprend un clapet (5) mobile sollicité par un organe (9) de rappel vers une position de fermeture contre un siège (7) fixe disposé autour du clapet (5) .

11. Dispositif selon l'une quelconque des revendications 1 à 10, **caractérisé en ce que** le mécanisme de clapet (4, 6, 8) de la seconde conduite (2) de transport comprend un clapet (4) de référence et un siège (6) mobile disposé autour du clapet (4) de référence, le siège (6) mobile étant sollicité vers une position de fermeture contre le clapet (4) de référence par un organe (8) de rappel.

12. Dispositif selon les revendications 10 et 11, **caractérisé en ce que**, dans la première configuration fermée, le clapet (4) de référence de la seconde conduite (3) de transport ne repousse pas le clapet (5) mobile de la première conduite (2) de transport hors de son siège (7) conservant la fermeture du mécanisme de clapet, le siège (6) mobile étant dans sa position de fermeture contre le clapet (4) de référence, dans la seconde configuration ouverte, les extrémités de raccordement sont en contact et le clapet (4) de référence de la seconde conduite (3) de transport repousse le clapet (5) mobile de la première conduite (2) de transport hors de son siège (7) et provoque l'ouverture du mécanisme de clapet.

13. Dispositif selon l'une quelconque des revendications 1 à 12, **caractérisé en ce que** le mécanisme de clapet (4, 6, 8) d'une des deux conduites (2) de transport est logé relativement plus en retrait à l'intérieur de son tube (10) externe que l'autre mécanisme de clapet (5, 7, 9) dans son tube (11) de sorte à former un système de type mâle et femelle dans lequel, en position assemblée des deux conduites (2, 3) de transport, une extrémité de raccordement pénètre dans l'autre extrémité de raccordement.

14. Dispositif selon l'une quelconque des revendications 1 à 13, **caractérisé en ce que** l'espace sous vide entre le tube externe (10, 11) et la conduite (2, 3) de transport comprend un isolant thermique, par exemple du type multicouches « MLI ».

15. Procédé d'accouplement de deux conduites (2, 3) de transport d'un dispositif selon l'une quelconque des revendications 1 à 14, comprenant une étape de rapprochement des deux extrémités de raccordement dans laquelle les deux extrémités de raccordement sont accouplées de façon étanche vis-à-vis de l'extérieur, une étape de mise en contact des deux mécanismes de clapet (4, 6, 8, 5, 7, 9), une étape d'ouverture deux mécanismes de clapet (4, 6, 8, 5, 7, 9) et une étape de circulation de fluide cryogénique d'une conduite à l'autre.

16. Procédé selon la revendication 15, **caractérisé en ce qu'**il comporte, avant l'étape d'ouverture des deux mécanismes de clapet (4, 6, 8, 5, 7, 9), une configuration intermédiaire dans laquelle les deux extrémités de raccordement sont accouplées de façon étanche vis-à-vis de l'extérieur et les deux mécanismes de clapet (4, 6, 8, 5, 7, 9) sont en position fermée, l'étape d'ouverture des deux mécanismes de clapet (4, 6, 8, 5, 7, 9) étant réalisée via un rapprochement relatif supplémentaire des deux conduites (2, 3) de transport de fluide et/ou un déplacement relatifs d'au moins une partie des deux mécanismes de clapets.

## Patentansprüche

1. Antriebsvorrichtung, insbesondere für ein fliegendes Fahrzeug, wie etwa ein Luftfahrzeug oder ein Raumfahrzeug, die mindestens einen Motor (2) und eine Kühlvorrichtung für den Motor (2) beinhaltet, wobei die Kühlvorrichtung für den Motor (2) einen Kryokühler beinhaltet, das heißt mit einer Temperatur zwischen minus 100 Grad Celsius und minus 273 Grad Celsius, wobei der Kühler einen Arbeitskreislauf (10) beinhaltet, der eine Schleife bildet und ein Arbeitsfluid enthält, wobei der Arbeitskreislauf (10) einen Ring bildet, der Folgendes in Reihe beinhaltet: einen Mechanismus (4) zum Komprimieren des Arbeitsfluids, einen Mechanismus (5) zum Kühlen des Arbeitsfluids, einen Mechanismus (16) zum Entspannen des Arbeitsfluids und einen Mechanismus (5, 7) zum Erwärmen des Arbeitsfluids, wobei der Kühler einen Abschnitt (7) zum Wärmeaustausch zwischen dem in dem Entspannungsmechanismus (16) entspannten Arbeitsfluid und dem Motor (2) beinhaltet, wobei der Kühler dazu konfiguriert ist, eine erste bestimmte maximale Kühlleistung (P1) zu produzieren, wobei die Kühlvorrichtung für den Motor (2) ferner ein zusätzliches Kühlsystem beinhaltet, das von dem Kühlmechanismus (5) des Arbeitsfluids getrennt ist und von dem Arbeitsfluid getrennt ist und einen Speicher (8) für ein kryogenes Fluid beinhaltet, der ein verflüssigtes und/oder sich im Festzustand befindliches Fluid beinhaltet, das in einen Wärmeaustausch mit dem Kühler und optional dem Motor (2) gebracht werden kann, wobei das zusätzliche Kühlsystem einen Transferkreislauf (9) für das kryogene Fluid in einem Wärmeaustausch mit dem Kühler und optional dem Motor (2) beinhaltet, wobei der Transferkreislauf (9) des zusätzlichen Kühlsystems einen Abschnitt in einem Wärmeaustausch mit dem Kreislauf (10) des Arbeitsfluids, mit mindestens einem Wärmetauscher (5) zum Erwärmen und/oder Kühlen des Arbeitsfluids des Arbeitskreislaufs (10), beinhaltet, wobei das zusätzliche Kühlsystem dazu konfiguriert ist, dem Kühler und dem Motor (2) eine zweite bestimmte maximale Kühlleistung (P2) bereitzustellen, wenn das kryogene Fluid mit dem Kühler und optional dem Motor (2) in einen Wärmeaustausch gebracht wird, **dadurch gekennzeichnet, dass** das zusätzliche Kühlsystem zwischen einer ersten Konfiguration, die während des Betriebs der Antriebsvorrichtung mittels Einspritzung von kryogenem Fluid für den Wärmeaustausch mit dem mindestens einen Wärmetauscher (5) dem Kühler die zweite maximale Kühlleistung (P2) bereitstellt, und einer zweiten Konfiguration, die während des Betriebs der Antriebsvorrichtung mittels Nicht-Einspritzung von Fluid und keinem Wärmeaustausch mit dem Tauscher (5) dem Kühler eine Kühlleistung von Null bereitstellt, umschaltbar ist.

2. Vorrichtung nach Anspruch 1, **dadurch gekennzeichnet, dass** der Arbeitskreislauf (10) mehrere Wärmetauscher (5) zum Erwärmen und/oder Kühlen des Arbeitsfluids, die in Reihe angeordnet sind, beinhaltet und dass der Transferkreislauf (9) des zusätzlichen Kühlsystems einen Abschnitt in einem Wärmeaustausch mit den in Reihe angeordneten Wärmetauschern (5) beinhaltet.

3. Vorrichtung nach einem beliebigen der Ansprüche 1 bis 2, **dadurch gekennzeichnet, dass** der Transferkreislauf (9) des zusätzlichen Kühlsystems ein stromaufwärtiges Ende, das mit dem Speicher (8) für kryogenes Fluid verbunden ist, und ein stromabwärtiges Ende, das mit einem Auslassbereich verbunden ist, beinhaltet.

4. Vorrichtung nach einem beliebigen der Ansprüche 1 bis 3, **dadurch gekennzeichnet, dass** das zusätzliche Kühlsystem einen Bypassabschnitt (14) des Arbeitskreislaufs (10) in einem Wärmeaustausch mit dem kryogenen Fluid des Speichers (8) und ein System (15) zur Verteilung mindestens eines Teils des Arbeitsfluids des Arbeitskreislaufs (10) in den Bypassabschnitt (14) beinhaltet.

5. Vorrichtung nach einem beliebigen der Ansprüche 1 bis 4, **dadurch gekennzeichnet, dass** das zusätzliche Kühlsystem dazu konfiguriert ist, die Kühlleistung der Kühlvorrichtung für den Motor (2) punktuell zu erhöhen, das heißt, dass die erste maximale Kühlleistung (P1) kleiner ist als die Summe aus der ersten maximalen Kühlleistung (P1) und der zweiten maximalen Kühlleistung (P2) .

6. Vorrichtung nach einem beliebigen der Ansprüche 1 bis 5, **dadurch gekennzeichnet, dass** die erste maximale Kühlleistung (P1) zwischen 40 und 80 % und vorzugsweise zwischen 50 und 70 % der Summe aus der ersten maximalen Kühlleistung (P1) und der zweiten maximalen Kühlleistung (P2) beträgt.

7. Vorrichtung nach einem beliebigen der Ansprüche 1 bis 6, **dadurch gekennzeichnet, dass** der Speicher (8) für kryogenes Fluid des zusätzlichen Kühlsystems mindestens eines von Folgendem enthält: Wasserstoff, Stickstoff, Neon, Helium in flüssigem und/oder festem Zustand.

8. Vorrichtung nach einem beliebigen der Ansprüche 1 bis 7, **dadurch gekennzeichnet, dass** der Motor (2) vom Typ supraleitend ist.

9. Vorrichtung nach einem beliebigen der Ansprüche 1 bis 8, **dadurch gekennzeichnet, dass** sie eine elektronische Steuerung (100) umfasst, die mit der Kühlvorrichtung für den Motor (2) verbunden ist und dazu konfiguriert ist, die Kühlleistung des Kühlers und des zusätzlichen Kühlsystems, die dem Motor (2) bereitgestellt wird, zu steuern.

10. Vorrichtung nach Anspruch 9, **dadurch gekennzeichnet, dass** die elektronische Steuerung (100) dazu konfiguriert ist, das Kühlleistungsniveau des Kühlers und des zusätzlichen Kühlsystems in Abhängigkeit von einem Sollwertsignal (11) zu regeln.

11. Fliegendes Fahrzeug, das eine Antriebsvorrichtung gemäß einem beliebigen der Ansprüche 1 bis 10 beinhaltet.

12. Fahrzeug nach Anspruch 11, **dadurch gekennzeichnet, dass** die Kühlvorrichtung für den Motor (2) dazu konfiguriert ist, während einer ersten Betriebsphase des Fahrzeugs, insbesondere während einer Phase des Abhebens, eine erste Kältemenge (P1+P2) zum Kühlen des Motors (2) bereitzustellen und während einer zweiten Betriebsphase des Fahrzeugs, insbesondere während einer Phase eines stabilen Flugs, eine zweite Kältemenge (P1) zum Kühlen des Motors (2) bereitzustellen, wobei die erste Kältemenge (P1+P2) größer ist als die zweite Kältemenge (P1) .

13. Fahrzeug nach Anspruch 12, **dadurch gekennzeichnet, dass** die erste Kältemenge (P1+P2) durch den Kühler und eventuell das zusätzliche Kühlsystem bereitgestellt wird, die zweite Kältemenge (P1) durch den Kühler und eventuell das zusätzliche Kühlsystem bereitgestellt wird.

14. Fahrzeug nach Anspruch 12 oder 13, **dadurch gekennzeichnet, dass** die erste Kältemenge die Summe aus der ersten maximalen Kühlleistung (P1), die durch den Kühler bereitgestellt wird, und der zweiten maximalen Kühlleistung (P2), die durch das zusätzliche Kühlsystem bereitgestellt wird, ist, wobei die zweite Kältemenge ausschließlich aus der ersten maximalen Kühlleistung (P1) besteht, die durch den Kühler bereitgestellt wird.

15. Verfahren zur Kühlung mindestens eines Motors eines Fahrzeugs nach einem beliebigen der Ansprüche 12 bis 14, wobei das Verfahren einen Schritt des Kühlens des Motors mit einer ersten Kältemenge (P1+P2) während einer ersten Betriebsphase des Fahrzeugs und einen Schritt des Kühlens des Motors mit einer zweiten Kältemenge (P1) während einer zweiten Betriebsphase des Fahrzeugs beinhaltet, wobei die erste Kältemenge größer als die zweite Kältemenge ist, und dass sich die erste Betriebsphase des Fahrzeugs chronologisch vor oder nach der zweiten Betriebsphase des Fahrzeugs befindet.

16. Verfahren nach Anspruch 15, **dadurch gekennzeichnet, dass** die erste Betriebsphase des Fahrzeugs eine erste bestimmte Dauer, beispielsweise während einer Phase des Abhebens, aufweist, die zwischen einer und zehn Minuten beträgt, die zweite Betriebsphase beispielsweise eine Phase eines stabilen Flugs beinhaltet, die eine zweite Dauer aufweist, die zwischen fünf Minuten und mehreren Stunden beträgt.

## Claims

1. Drive device, notably for a flying vehicle such as an aircraft or spacecraft, comprising at least one motor (2) and a device for cooling the motor (2), the device for cooling the motor (2) comprising a cryogenic refrigerator, which is to say one that operates at a temperature of between minus 100 degrees centigrade and minus 273 degrees centigrade, the refrigerator comprising a working circuit (10) forming a loop and containing a working fluid, the working circuit (10) forming a cycle comprising, in series: a mechanism (4) for compressing the working fluid, a mechanism (5) for cooling the working fluid, a mechanism (16) for expanding the working fluid, and a mechanism (5, 7) for heating the working fluid, the refrigerator comprising a heat-exchange portion (7) for exchange of heat between the working fluid expanded in the expansion mechanism (16) and the motor (2), the refrigerator being configured to produce a determined first maximum refrigeration power (P1), wherein the device for cooling the motor (2) further comprises an additional refrigeration system distinct from the mechanism (5) for cooling the working fluid and distinct from the working fluid and comprising a store (8) of cryogenic fluid comprising a fluid that is liquefied and/or in the solid state that can be brought into a heat-exchange relationship with the refrigerator and optionally with the motor (2), the additional refrigeration system comprising a transfer circuit (9) transferring the cryogenic fluid into a heat-exchange relationship with the refrigerator and optionally with the motor (2), the transfer circuit (9) of the additional refrigeration system comprising a portion in a heat-exchange relationship with the circuit (10) of the working fluid, with at least one heat exchanger (5) for heating and/or cooling the working fluid of the working circuit (10), the additional refrigeration system being configured to supply a determined second maximum refrigeration power (P2) to the refrigerator and to the motor (2) when the cryogenic fluid is brought into a heat-exchange relationship with the refrigerator and optionally with the motor (2), **characterized in that** the additional refrigeration system can be switched over between a first configuration supplying, during operation of the drive device, the second maximum refrigeration power (P2) to the refrigerator by injecting cryogenic fluid for exchange of heat with the at least one heat exchanger (5), and a second configuration supplying, during operation of the drive device, the refrigerator with a cooling power that is zero by not injecting fluid and not exchanging heat with the exchanger (5).

2. Device according to Claim 1, **characterized in that** the working circuit (10) comprises several heat exchangers (5) for heating and/or cooling the working fluid and which are arranged in series, and **in that** the transfer circuit (9) of the additional refrigeration system comprises a portion in a heat-exchange relationship with said in-series heat exchangers (5).

3. Device according to either one of Claims 1 and 2, **characterized in that** the transfer circuit (9) of the additional refrigeration system comprises an upstream end connected to the store (8) of cryogenic fluid and a downstream end connected to a discharge zone.

4. Device according to any one of Claims 1 to 3, **characterized in that** the additional refrigeration system comprises a bypass portion (14) bypassing the working circuit (10) and in a heat-exchange relationship with the cryogenic fluid of the store (8) and a distribution system (15) distributing at least a part of the working fluid of the working circuit (10) into said bypass portion (14).

5. Device according to any one of Claims 1 to 4, **characterized in that** the additional refrigeration system is configured to increase only briefly the refrigeration power of the device for cooling the motor (2), which is to say that the first maximum refrigeration power (P1) is less than the sum of the first maximum refrigeration power (P1) and of the second maximum refrigeration power (P2) .

6. Device according to any one of Claims 1 to 5, **characterized in that** the first maximum refrigeration power (P1) is comprised between 40 and 80% and preferably between 50 and 70% of the sum of the first maximum refrigeration power (P1) and of the second maximum refrigeration power (P2).

7. Device according to any one of Claims 1 to 6, **characterized in that** the store (8) of cryogenic fluid of the additional refrigeration system contains at least one of the following: hydrogen, nitrogen, neon, helium in the liquid and/or solid state.

8. Device according to any one of Claims 1 to 7, **characterized in that** the motor (2) is of the superconducting type.

9. Device according to any one of Claims 1 to 8, **characterized in that** it comprises an electronic controller (100) connected to the device for cooling the motor (2) and configured to control the refrigeration power supplied to the motor (2) by the refrigerator and by the additional refrigeration system.

10. Device according to Claim 9, **characterized in that** the electronic controller (100) is configured to regulate the level of refrigeration power of the refrigerator and of the additional refrigeration system as a function of a setpoint signal (11).

11. Flying vehicle comprising a drive device according to any one of Claims 1 to 10.

12. Vehicle according to Claim 11, **characterized in that** the device for cooling the motor (2) is configured to supply a first amount of cold (P1+P2) to cool the motor (2) during a first phase of operation of the vehicle, notably during a takeoff/lift-off phase, and to supply a second amount of cold (P1) to cool the motor (2) during a second phase of operation of the vehicle, notably during a phase of steady-state flight, the first amount of cold (P1+P2) being greater than the second amount of cold (P1).

13. Vehicle according to Claim 12, **characterized in that** the first amount of cold (P1+P2) is supplied by the refrigerator and possibly the additional refrigeration system, the second amount of cold (P1) is supplied by the refrigerator and possibly the additional refrigeration system.

14. Vehicle according to Claim 12 or 13, **characterized in that** the first amount of cold is the sum of the first maximum refrigeration power (P1) supplied by the refrigerator and of the second maximum refrigeration power (P2) supplied by the additional refrigeration system, the second amount of cold consisting only of the first maximum refrigeration power (P1) supplied by the refrigerator.

15. Method for cooling at least a motor of a vehicle according to any one of Claims 12 to 14, the method comprising a step of cooling the motor with a first amount of cold (P1+P2) during a first phase of operation of the vehicle and a step of cooling the motor with a second amount of cold (P1) during a second phase of operation of the vehicle, the first amount of cold being greater than the second amount of cold, and in that the first phase of operation of the vehicle is situated chronologically before or after the second phase of operation of the vehicle.

16. Method according to Claim 15, **characterized in that** the first phase of operation of the vehicle has a determined first duration, for example during a takeoff/lift-off phase comprised between one and ten minutes, the second phase of operation comprises, for example, a phase of steady-state flight having a second duration comprised between five minutes and several hours.
